# EUROPEAN PATENT APPLICATION

(11) **EP 4 621 748 A1**
(43) Date of publication of application: **24.09.2025**
(21) Application number: 25157666.6
(22) Date of filing: 13.02.2025
(51) Int. Cl.: G08B 17/12, G08B 29/18

(54) **SYSTEM AND METHOD TO DETERMINE BETWEEN FIRE OR A REFLECTION OF A FRIENDLY FLAME**

(30) Priority: 22.03.2024 IN 202411022218
(71) Applicant: Life Safety Distribution GmbH, 1180 Rolle (CH)
(72) Inventor: RAMANA, Akula Venkata, Charlotte, 28202 (US)
(74) Representative: Haseltine Lake Kempner LLP

(57) **Abstract**

A system is disclosed. The system comprises a flame detector configured to detect radiations within a field of view (FOV) and convert into one or more analog to digital converter (ADC) signals. The at least one processor is operationally coupled to the at least one flame detector. The at least one processor is configured to receive the one or more ADC signals from the at least one flame detector and determine a plurality of characteristics from the one or more ADC signals. Further, the plurality of characteristics comprises at least one of statistical features, frequency based features, or time-based features. Thereafter, the at least one processor is configured to determine whether the one or more ADC signals are indicative of a fire, a friendly flame, or a reflection of a friendly flame based at least on the plurality of characteristics using a trained machine learning (ML) model.

## Description

### TECHNOLOGICAL FIELD

An example embodiment relates generally to a system and method, and more particularly, relates to a flame detector for determining fire or a reflection of a friendly flame.

### BACKGROUND

Flame detectors are safety devices designed to identify flame generated due to combustion of different fuel sources and alert occupants or operators to the presence of fire and smoke in a timely manner. Existing flame detectors may be unable to distinguish between an actual fire and a friendly flame or a reflection of a friendly flame. For example, industrial plants, such as petroleum refineries, chemical plants, and natural gas processing plants, often dispose of gases with a gas combustion device, such as a flare stack. Flame often protrudes from the flare stack, which is expected. Industrial plants often include structures with shiny surfaces, such as metal silos. The "friendly" flame that protrudes from the flare stack may cause a reflection on the shiny surfaces, which may be sensed by a flame detector. Existing flame detectors often erroneously trigger an alarm for detection of the reflection of the friendly flame that protrudes from flare stack.

Additionally, in many industrial processes and household environments, bright lights and/or high intensity light glares are common. These bright lights and/or high intensity light glares may also result in existing flame detectors to erroneously trigger an alarm for detection of these lights. Also, certain events that occur on an industrial site, such as welding, may also result in an alarm being erroneously triggered.

Applicant has identified numerous areas of improvement in the existing technologies and processes, which are the subjects of embodiments described herein. Through applied effort, ingenuity, and innovation, many of these deficiencies, challenges, and problems have been solved by developing solutions that are included in embodiments of the present disclosure, some examples of which are described in detail herein.

### BRIEF SUMMARY OF THE INVENTION

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a system is disclosed. The system comprises at least one flame detector configured to detect one or more radiations within a field of view (FOV) and convert into one or more analog to digital converter (ADC) signals. Further, at least one processor operationally coupled to the at least one flame detector, the at least one processor is configured to receive the one or more ADC signals from the at least one flame detector and determine a plurality of characteristics from the one or more ADC signals. The plurality of characteristics comprises at least one of statistical features, frequency based features, or time-based features. Further, the at least one processor is configured to determine whether the one or more ADC signals are indicative of a fire, a friendly flame, or a reflection of a friendly flame based at least on the plurality of characteristics using a trained machine learning (ML) model.

In some embodiments, the at least one processor is configured to train the ML model based at least on the plurality of characteristics extracted from the one or more ADC signals over a period of time. In some embodiments, the at least one processor is configured to deploy the trained ML model for determining the fire, the friendly flame, or the reflection of the friendly flame. In some embodiments, the at least one flame detector comprises at least one of infrared (IR) sensors, photodiodes, or a combination of the IR sensors and the photodiodes.

In some embodiments, the statistical features comprise at least one of a skewness, kurtosis, or skewness and kurtosis ratio. In some embodiments, the at least one processor is configured to detect fluctuations or modulation of the plurality of characteristics determined from the one or more ADC signals to determine whether the one or more ADC signals are indicative of the fire, the friendly flame, or the reflection of the friendly flame.

In some embodiments, the at least one processor is configured to extract the plurality of characteristics within a low frequency range and a high frequency range of the flame and the reflection of the friendly flame. In some embodiments, the low frequency range defines a range between 2-9 Hz and 11-15Hz and the high frequency range defines frequencies higher than 15Hz. In some embodiments, the trained ML model comprises aggregated simulation of a plurality of models that are trained by the at least one processor over a period of time.

In some embodiments, the at least one processor is configured to generate a signal in response to a determination that the one or more ADC signals are indicative of a fire, and transmit the signal to a communication device for alerting a user.

In another example embodiment, a method is disclosed. The method comprises receiving, via at least one processor, one or more analog to digital (ADC) signals from at least one flame detector. The method further comprises determining, via the at least one processor, a plurality of characteristics from the one or more ADC signals. The plurality of characteristics comprises at least one of statistical features, frequency based features, or time-based features. The method further comprises determining, via the at least one processor, whether the one or more ADC signals are indicative of a fire, a friendly flame, or a reflection of a friendly flame, based at least on the plurality of characteristics using a trained machine learning (ML) model.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the present disclosure in any way. It will be appreciated that the scope of the present disclosure encompasses many potential embodiments in addition to those here summarized, some of which will be further described below.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a block diagram of a system in accordance with an example embodiment of the present disclosure;
FIG. 2 illustrates a perspective view of at least one flame detector in accordance with an example embodiment of the present disclosure;
FIG. 3 illustrates a flowchart of the system in accordance with an example embodiment of the present disclosure;
FIG. 4 illustrates a graphical representation of a spectrum of one or more radiations in accordance with an example embodiment of the present disclosure;
FIG. 5A illustrates a graphical representation of one or more analog to digital converter (ADC) signals and the one or more ADC signals filtered at a band pass frequency range in accordance with an example embodiment of the present disclosure;
FIG. 5B illustrates a graphical representation of the one or more ADC signals and the one or more ADC signals filtered at low frequency and with high frequency in accordance with an example embodiment of the present disclosure;
FIGS. 6A-6F illustrate a graphical representation of kernel density estimation (KDE) plots of a plurality of characteristics determined from the one or more ADC signals in accordance with the example embodiment of the present disclosure;
FIG. 7 illustrates a graphical representation of a learning curve for a machine learning (ML) model in accordance with an example embodiments of the present disclosure;
FIG. 8 illustrates a graphical representation of a confusion matrix of the ML model test results in accordance with an example embodiment of the present disclosure;
FIG. 9 illustrates a receiver operating characteristics (ROC) graph of the trained ML model training in accordance with an example embodiment of the present disclosure;
FIG. 10 illustrates a table showing test results of the trained ML model in accordance with an example embodiment of the present disclosure; and
FIG. 11 illustrates a flowchart of a method in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

Embodiments of the present disclosure will be described more fully hereinafter with reference to the accompanying drawings in which like numerals represent like elements throughout the several figures, and in which example embodiments are shown. Embodiments of the present disclosure may, however, be embodied in alternative forms and should not be construed as being limited to the embodiments set forth herein. The examples set forth herein are non-limiting examples and are merely examples among other possible examples.

The present invention provides various embodiments of a system and method to determine between a fire, a friendly flame, or a reflection of a friendly flame. Embodiments may be configured to detect one or more radiations emitted within a field of view (FOV) using at least one flame detector. Embodiments may be configured to convert the detected one or more radiations into one or more analog to digital converter (ADC) signals. Embodiments may be configured to determine a plurality of characteristics from the one or more ADC signals. Based on the determined plurality of characteristics, embodiments may be configured to determine whether the one or more ADC signals are indicative of a fire, a friendly flame, or a reflection of a friendly flame fire using a trained machine learning (ML) model. Embodiments may further be configured to trigger alarms to alert a user regarding the presence of the flame within the FOV. Embodiments may notify the user regarding the presence of the reflection of the friendly flame within the FOV. Embodiments may prevent any false alarm due to resemblance of the reflection of the friendly flame with the flame source thereby preventing any unwanted panic in surroundings. Additionally, embodiments may be integrated into various settings, from industrial facilities to household applications, providing an accurate solution to determine fire, friendly flame, or reflection of the friendly flame to prevent any false alarm and panic in surroundings.

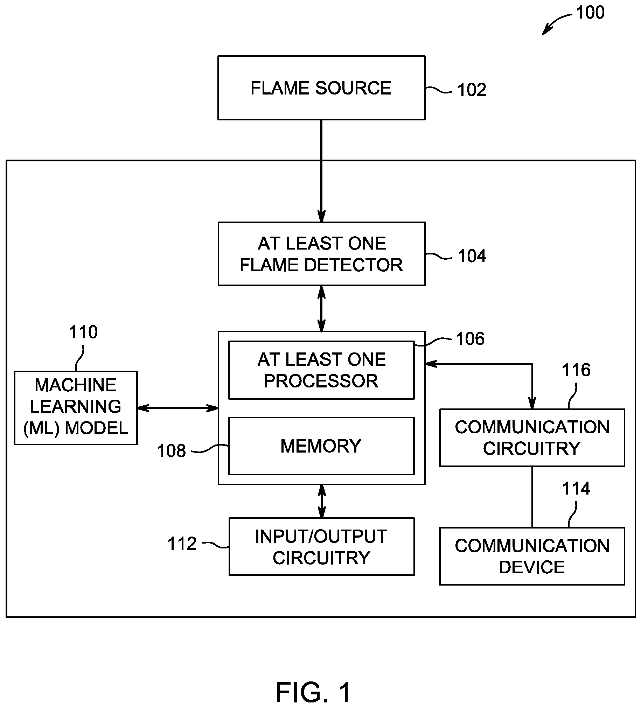

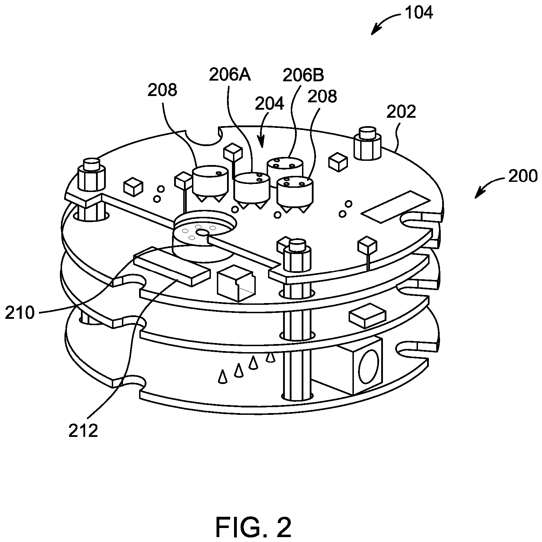

FIG. 1 illustrates a block diagram of a system 100 for determining fire, a friendly flame, or a reflection of a friendly flame, in accordance with an example embodiment of the present disclosure. FIG. 2 illustrates a perspective view of at least one flame detector 104, in accordance with an example embodiment of the present disclosure.

The system 100 may comprise the at least one flame detector 104, at least one processor 106, a memory 108, a machine learning (ML) model 110, an input/output circuitry 112, a communication device 114, and a communication circuitry 116. In some embodiments, the at least one flame detector 104 may be configured to detect one or more radiations emitted from a flame source 102 within a field of view (FOV). In some embodiments, the flame source 102 may correspond to hydrogen gas, hydrocarbon gas, methane gas or other combustible fuel sources. In some embodiments, the flame source 102 may be configured to emit the one or more radiations during the combustion. Further, the one or more radiations may be detected in a form of one or more infrared (IR) signals, one or more light signals, or one or more heat signals.

In some embodiments, the at least one flame detector 104 may be configured to detect the one or more radiations. Further, the at least one flame detector 104 may comprise at least one subassembly 200 having a printed circuit board assembly (PCBA) stack 202. In some embodiments, the PCBA stack 202 may be fabricated with the at least one flame detector 104 having at least one infrared (IR) sensor 204, photodiodes 208, an ultraviolet (UV) light sensor 210, or a combination of the at least one IR sensor 204, the photodiodes 208 and the UV light sensor 210, as illustrated in FIG. 2. In some embodiments, the at least one flame detector 104 may correspond to the at least one IR sensor 204 or the photodiodes 208. In some embodiments, the at least one IR sensor 204 and the photodiodes 208 may be configured to capture the one or more radiations. Further, the UV light sensor 210 may be configured to capture the one or more radiations in an ultraviolet frequency range. Further, the UV light sensor 210 may be coupled with a UV test source 212. In some embodiments, the UV test source 212 may be configured to fetch response received from the UV light sensor 210.

As illustrated in FIG. 2, the PCBA stack 202 may comprise at least one analog front end board (AFE) board. In some embodiments, the AFE board may be fabricated with the at least one IR sensor 204. In some embodiments, the AFE board may be fabricated with the photodiodes 208. In some embodiments, the AFE board may be fabricated with the combination of the at least one IR sensor 204 and the photodiodes 208. In some embodiments, the at least one IR sensor 204 may further correspond to one or more Lead Selenide (PbSe) detectors. In some embodiments, the one or more PbSe detectors may comprise a wide band PbSe detector 206A and a long band PbSe detector 206B. Further, the wide band PbSe detector 206A may be configured to detect the one or more radiations within a wide band of the ultraviolet frequency range. Further, the long band PbSe detector 206B may be configured to detect the one or more radiations within a long band of the ultraviolet frequency range. In some embodiments, the at least one IR sensor 204 and the photodiodes 208 may be configured to capture the one or more radiations in the form of one or more analog signals. Further, the AFE board may be fabricated with one or more active and passive electronic components that may enable the at least one flame detector 104 to detect the one or more radiations.

In some embodiments, the at least one flame detector 104 may be integrated with an analog to digital converter (ADC) (not shown). In some embodiments, the ADC may be configured to convert the one or more analog signals corresponding to the one or more radiations, into one or more digital signals. Further, the one or more digital signals may also be referred as one or more ADC signals, such as one or more ADC counts. In some embodiments, the ADC may be operationally coupled with the at least one processor 106. In some embodiments, the ADC may be configured to feed the one or more ADC signals to the at least one processor 106.

In some embodiments, the at least one processor 106 may include suitable logic, circuitry, and/or interfaces that are operable to execute one or more instructions stored in the memory 108 to perform predetermined operations. In one embodiment, the at least one processor 106 may be configured to decode and execute any instructions received from one or more other electronic devices or server(s). The at least one processor 106 may be configured to execute one or more computer-readable program instructions, such as program instructions to carry out any of the functions described in this description. Further, the at least one processor 106 may be implemented using one or more processor technologies known in the art. Examples of the at least one processor 106 include, but are not limited to, one or more general purpose processors and/or one or more special purpose processors (e.g., digital signal processors or Field Programmable Gate Array (FPGA) processor).

In some embodiments, the at least one processor 106 may be configured to receive the one or more ADC signals from the ADC. Further, the at least one processor 106 may be communicatively paired with the ML model 110. In some embodiments, the at least one processor 106 may be configured to implement one or more machine learning protocols to determine between a fire, a friendly flame, or a reflection of a friendly fire. In some embodiments, the one or more protocols may involve collecting datasets, extracting a plurality of characteristics from the collected datasets. Further, the at least one processor 106 may be configured to train the ML model 110 based at least on the plurality of characteristics extracted from the one or more ADC signals over a period of time. In some embodiments, the at least one processor 106 determines that the one or more ADC signals are indicative of the fire, then the at least one processor 106 may transmit the signal to the communication device 114 through the input/output circuitry 112 and the communication circuitry 116.

In some embodiments, the ML model 110 may be configured to validate and test the plurality of characteristics by comparing the plurality of characteristics with a plurality of scenarios over a period of time. The ML model comprises aggregated simulation of a plurality of models that are trained by the at least one processor over a period of time. Further, the plurality of scenarios may correspond to instances of fires generated from a different flame source and reflection of friendly fires. Further, the trained ML model 110 may be configured to generate one or more results, based at least on the validation and tests of the plurality of characteristics. In some embodiments, the one or more results may indicate between the fire, the friendly flame, or the reflection of the friendly fire. Examples of the friendly flame may include, but is not limited to a flare stack. Further, the flare stack may correspond to one or more scenarios where friendly flames are generated to eliminate one or more hazardous gases. Further, the one or more hazardous gases may be generated within various industrial environments (i.e. petroleum refineries, chemical plants natural gas processing plants, and at oil or gas production sites). In some embodiments, the results of the validation and tests may be saved within the memory 108._In some embodiments, the memory 108 may be configured to store a set of instructions and data executed by the at least one processor 106. The memory 108 may include the one or more instructions that are executable by the at least one processor 106 to perform specific operations. It is apparent to a skilled artisan that the one or more instructions stored in the memory 108 enable the hardware of the system 100 to perform the predetermined operations. Some of the commonly known memory 108 implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

As illustrated in FIG. 1, the system 100 may comprise the input/output circuity 112 that enables a user to communicate or interface with the system 100 via the communication device 114. It may be noted that the input/output circuitry 112 may act as a medium to transmit input from the communication device 114 to and from the system 100. In some embodiments, the input/output circuitry 112 may refer to the hardware and software components that facilitate the exchange of information between the user and the system 100. The input/output circuitry 112 may include various input devices such as keyboards, barcode scanners, GUI for the user to provide data and various output devices such as displays, printers for the user to receive data.

In one example, the communication device 114 may include N number of user devices. In some embodiments, the communication device 114 may include a graphical user interface (GUI) (not shown) as input circuitry to allow the user to input data. In some embodiments, the communication device 114 may comprise at least one of one or more mobile phones, laptops, or like.

In some embodiments, the communication circuitry 116 may allow the system 100 and the communication device 114 to exchange data or information with other system or apparatuses. Further, the system 100 may be communicatively coupled with a network interface via one or more protocols and software modules for sending and receiving data or information. In some embodiments, the communication circuitry 116 may include Ethernet ports, Wi-Fi adapters, or communication protocols for connecting with other systems. The communication circuitry 116 may allow the system 100 to stay up-to-date.

It will be apparent to one skilled in the art that above-mentioned components of the system 100 have been provided only for illustration purposes, without departing from the scope of the disclosure.

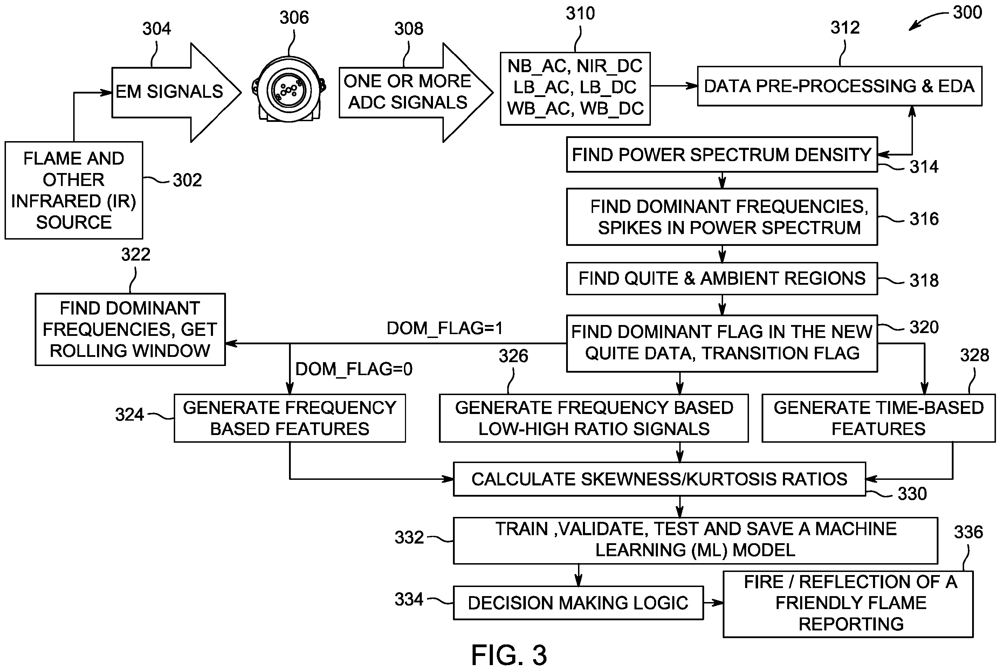

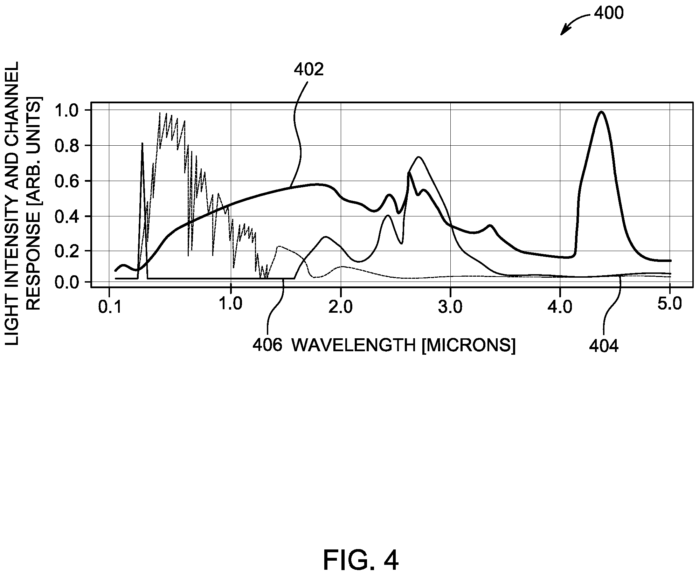

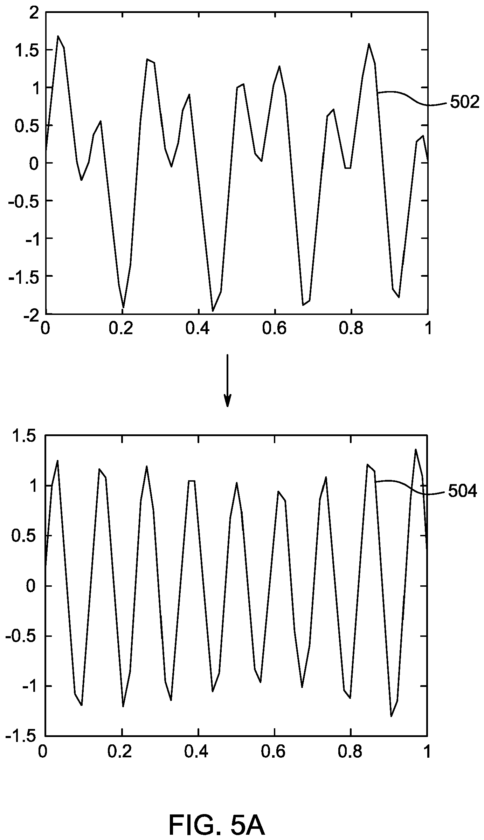

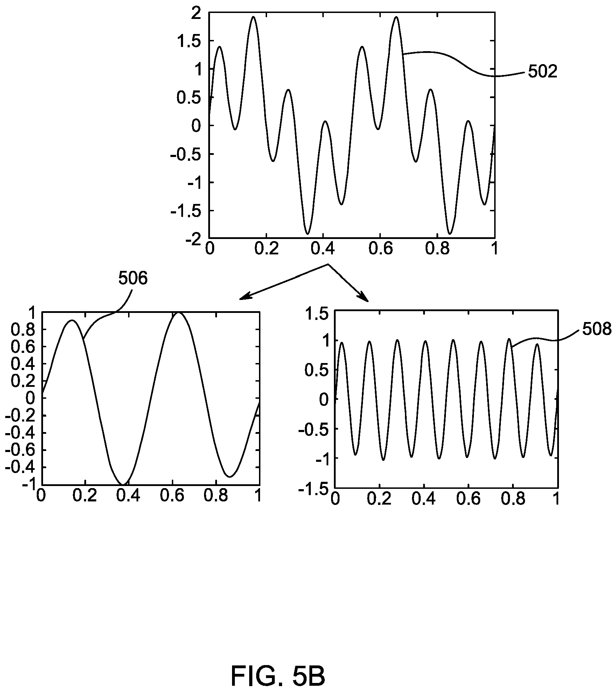

FIG. 3 illustrates a flowchart 300 of the system 100, in accordance with an example embodiment of the present disclosure. FIG. 4 illustrates a graphical representation of a spectrum 400 of the one or more radiations in accordance with an example embodiment of the present disclosure. FIG. 5A illustrates a graphical representation of the one or more analog to digital converter (ADC) signals 502 and the one or more ADC signals filtered at a band pass frequency range in accordance with an example embodiment of the present disclosure. FIG. 5B illustrates a graphical representation of the one or more ADC signals 502 and the one or more ADC signals 502 filtered at low frequency and the one or more ADC signals filtered with high frequency in accordance with an example embodiment of the present disclosure. FIGS. 4 -5B are described in conjunction with FIG. 3.

At operation 302, the at least one flame detector 104 may be configured to detect the one or more radiations from the flame source 102 and other infrared sources. The at least one flame detector 104 may comprise the at least one IR sensor 204, the photodiodes 208, the UV light sensor 210 and the combination of the at least one IR sensor 204, the photodiodes 208 and the UV light sensor 210. Further, the at least one IR sensor 204 may detect the one or more radiations within a range of 2.5 µm - 3.0 µm. Further, the photodiodes 208 may be configured to detect the one or more radiations within a range of 0.18 µm - 0.26 µm. In some embodiments, the at least one IR sensor 204 and the photodiodes 208 may be configured to detect water vapor generated from combustion of the flame source 102 that may include but not limited to hydrogen gas and hydrocarbon gas.

At operation 304, the at least one flame detector 104 may be configured to detect the one or more radiations in a form of electromagnetic signals. In some embodiments, the one or more electromagnetic signals may correspond to one or more electrical signals. In some embodiments, the one or more electromagnetic signals may possess different wavelength. A graphical representation of the spectrum 400 of the one or more radiations emitted from the flame source 102 may be illustrated in FIG. 4. The graphical representation may represent the spectrum 400 of wavelength of the one or more radiations emitted by the flame source 102. In one example embodiment, the spectrum 400 may comprise wavelength of the one or more radiations emitted due to a combustion of ethylene (illustrated by 402). Further, the spectrum 400 may comprise wavelength of the one or more radiations emitted due to sunlight (illustrated by 404). In another example embodiment, the spectrum 400 may comprise wavelength of the one or more radiations emitted due to combustion of hydrogen gas (illustrated by 406).

In some embodiments, the at least one flame detector 104 may be configured to detect the one or more radiations in the form of analog signals. Further, the one or more radiations may correspond to one or more electromagnetic radiations in the infrared (IR), visible light and ultraviolet (UV) wavelengths. Further, wavelength of the one or more radiations depends upon the type of fuel source.

At operation 306, an analog to digital converter (ADC) 308 may be configured to fetch the one or more analog signals and convert into the one or more ADC signals 502. Further, the at least one processor 106 may be configured to receive the one or more ADC signals 502 from the ADC 308. Further, the at least one processor 106 may be configured to determine the plurality of characteristics from the one or more ADC signals 502. In some embodiments, the plurality of characteristics may comprise at least one of frequency based features, time-based features or statistical features.

At operation 310, the at least one processor 106 may be configured to pass the one or more ADC signals 502 from at least filter to eliminate any noise present in the one or more ADC signals 502. Further, the filtering of the one or more ADC signals 502 may be configured to emphasize a signal-to-noise ratio. In some embodiments, the at least one filter may correspond to a band pass filter, a high-pass filter, or a low-pass filter. Further, upon passing the one or more ADC signals 502 through the band pass filter, the high-pass filter, or the low-pass filter, the one or more ADC signals filtered.

The one or more ADC signals filtered may corresponds to narrow-band alternating current (NB_AC) signals. Further, upon filtering the one or more ADC signals 502 at a narrow band the NB_AC signals may be obtained. Further, the one or more ADC signals filtered may corresponds to near infrared direct current (NIR_DC) signals. Further, upon filtering DC components of the one or more ADC signals 502 received from the near infrared sensor the NIR_DC signals may be obtained.

Further, the one or more ADC signals filtered may corresponds to low-band alternating current (LB_AC) signals Further, upon filtering the one or more ADC signals 502 at a low band the LB_AC signals may be obtained. Further, the one or more ADC signals filtered may corresponds to low-band direct current (LB_DC) signals Further, upon filtering the one or more ADC signals 502 at a low band the LB_DC signals may be obtained.

Further, the one or more ADC signals 502 filtered may corresponds to wide-band alternating current (WB_AC) signals Further, upon filtering the one or more ADC signals 502 at a wide band the WB_AC signals may be obtained. Further, the one or more ADC signals 502 filtered may corresponds to wide-band direct current (WB_DC) signals Further, upon filtering the one or more ADC signals 502 at a wide band, the WB_DC signals may be obtained.

In some embodiments, the at least one processor 106 may be configured to pass the one or more ADC signals 502 from the at least filter to eliminate any noise present in the one or more ADC signals 502. In some embodiments, the one or more ADC signals 502 may comprise a band pass signal 504, a low frequency signal 506, and a high frequency signal 508. Further, the low frequency signal 506 defines a range between 2-9 Hz and 11-15Hz and the high frequency signal 508 defines frequencies higher than 15Hz. Further, the filtering of the one or more ADC signals 502 may be configured to emphasize a signal-to-noise ratio.

In some embodiments, the one or more ADC signals 502 and the one or more ADC signals filtered at a band pass frequency range, are illustrated in FIG. 5A. Further, the one or more ADC signals 502 and the one or more filtered ADC signals 502 with low frequency, the one or more filtered ADC signals with high frequency are illustrated in FIG. 5B.

At operation 312, the at least one processor 106 may be configured to perform data pre-processing and an exploratory data analysis (EDA) over the one or more ADC signals filtered. In some embodiments, the at least one processor 106 may be configured to apply a signal processing technique on the one or more ADC signals 502. Further, the signal processing technique may correspond to a fast fourier transform (FFT). In some embodiments, the at least one processor 106 may be configured to find the frequency based features and the time-based features, based at least on the data pre-processing and the EDA.

At operation 314, the at least one processor 106 may be configured to find the power spectrum density from the one or more ADC signals 502, based at least on data pre-processing and exploratory data analysis (EDA). Further, the power spectrum density may correspond to a power distribution of the one or more ADC signals 502 at one or more frequency spectrum. At operation 316, the at least one processor 106 may be configured to find dominant frequencies and spikes in the power spectrum, based at least one the power spectrum density. In some embodiments, the dominant frequencies may correspond to flame pattern for e.g., flickering and modulation.

At operation 318, the at least one processor 106 may be configured to find quiet and ambient regions from the one or more ADC signals 502, based at least on the dominant frequencies and spikes in the power spectrum. In some embodiments, the quite region may correspond to a frequency range in the one or more ADC signals 502 that may be configured to represent normal state when no flame is present. Further, the ambient region may correspond to a frequency range in the one or more ADC signals 502 that may be configured to represent presence of flame.

At operation 320, the at least one processor 106 may be configured to find dominant flag and transition flag, based at least on the quite regions and ambient regions. In some embodiments, the dominant flag may correspond to flame pattern detected by the one or more ADC signals 502. In some embodiments, the transition flag may correspond to sudden variations in the one or more ADC signals 502.

In one embodiment, at operation 322, when the at least one processor 106 determines the dominant flag in the one or more ADC signals 502, the at least one processor 106 may be configured to find the dominant frequencies and determine a rolling window. Further, the rolling window approach may correspond to a frequency analysis of the one or more ADC signals 502 at various time intervals.

In another embodiment, at operation 324, when the dominant flag is not determined by the at least one processor 106, the at least one processor 106 may be configured to generate the frequency based features, based at least one the one or more ADC signals 502. At operation 326, the at least one processor 106 may be configured to generate a plurality of ratio signals from the low frequency signals of the one or more ADC signals 502 and the high frequency signals of the one or more ADC signals 502. In an exemplary embodiment, the plurality of ratio signals may comprise PSum_LbLo_WbHi: ratio of PSumLow (sum of the at least one power spectral density over 2-9Hz and 11-15Hz) of LBAC over PSumHigh (sum of the at least one power spectral density over 21-29Hz) of WBAC and PPratioWbLb: ration of slew-rate limited peak-to-peak with fast decay of WBAC over slew-rate limited peak-to-peak with fast decay of LBAC.

At operation 328, the at least one processor 106 may be configured to generate the time-based features, based at least on the one or more ADC signals 502. In some embodiments, the time-based features may comprise mean-variance, skewness, and kurtosis. At operation 330, the at least one processor 106 may be configured to calculate the skewness and kurtosis. In some embodiments, the skewness and kurtosis may be configured to provide the statistical features of the one or more ADC signals 502.

At operation 332, the at least one processor 106 may be configured to train the ML model 110 based at least on the plurality of characteristics determined. Further, upon training the ML model 110, the at least one processor 106 may be configured to validate the training data provided to the ML model 110. Further, the trained ML model 110 may be configured to test the plurality of characteristics based at least on samples of the one or more ADC signals 502 provided to the at least one processor 106 by a rolling window approach. The rolling window approach may correspond to sampling of the one or more ADC signals 502 every 16.67ms/120 points.

In some embodiments, the trained ML model 110 may comprise aggregated simulation of a plurality of models that may be trained by the at least one processor 106 over a period of time. Further, the plurality of models comprises at least one of logistic regression, random forest, support vector machine, gradient boosting, k nearest neighbors, decision tree or neural network, or like. In some embodiments, the at least one processor 106 may be configured to validate and test the training data through one or more KDE plots. Further, the KDE plots may be configured to provide a visual representation of probabilities of the training results at different frequency range and with different power spectrum.

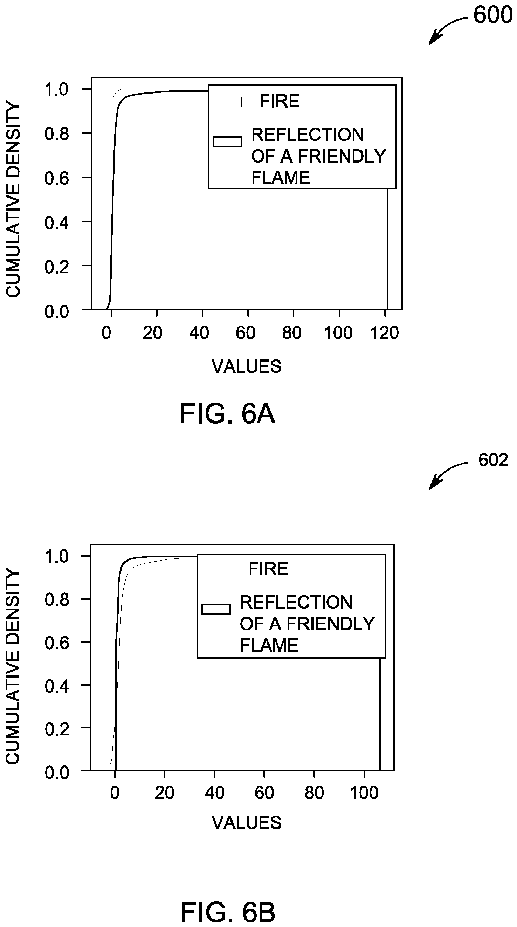

FIGS. 6A-6F illustrate a graphical representation of kernel density estimation (KDE) plots of the plurality of characteristics determined from the one or more ADC signals 502, in accordance with the example embodiment of the present disclosure. FIGS. 6A -6F are described in conjunction with FIG. 3.

In some embodiments, the at least one processor 106 may be configured to validate the one or more ADC signals 502 provided to the ML model 110. Further, a KDE plot 600 may illustrate probabilities of the status of flame (i.e., determine whether the one or more ADC signals 502 are indicative of a fire, a friendly flame, or a reflection of a friendly flame) for narrow band alternating current (NB_AC) signal of the one or more ADC signals 502. Further, the KDE plot 600 may illustrate visual representation of a difference between the one or more ADC signals 502 indicative of the fire and the one or more ADC signals 502 indicative of the reflection of a friendly flame for narrow band alternating current (NB_ AC) signal of the one or more ADC signals 502. Further, the X-axis of the KDE plot 600 corresponds to values of time interval and the Y-axis of the KDE plot 600 corresponds to a cumulative density of the one or more ADC signals 502.

As illustrated in FIG. 6B, the at least one processor 106 may be configured to validate the one or more ADC signals 502 provided to the ML model 110. Further, a KDE plot 602 may illustrate probabilities of the status of flame (i.e., determine whether the one or more ADC signals 502 are indicative of a fire, a friendly flame, or a reflection of a friendly flame) for low band direct current (LB_DC) signal of the one or more ADC signals 502. Further, the KDE plot 602 may illustrate visual representation of a difference between the one or more ADC signals 502 indicative of the fire and the one or more ADC signals 502 indicative of the reflection of the friendly flame for low band direct current (LB_DC) signal of the one or more ADC signals 502. Further, the X-axis of the KDE plot 602 corresponds to values of time interval and the Y-axis of the KDE plot 602 corresponds to a cumulative density of the one or more ADC signals 502.

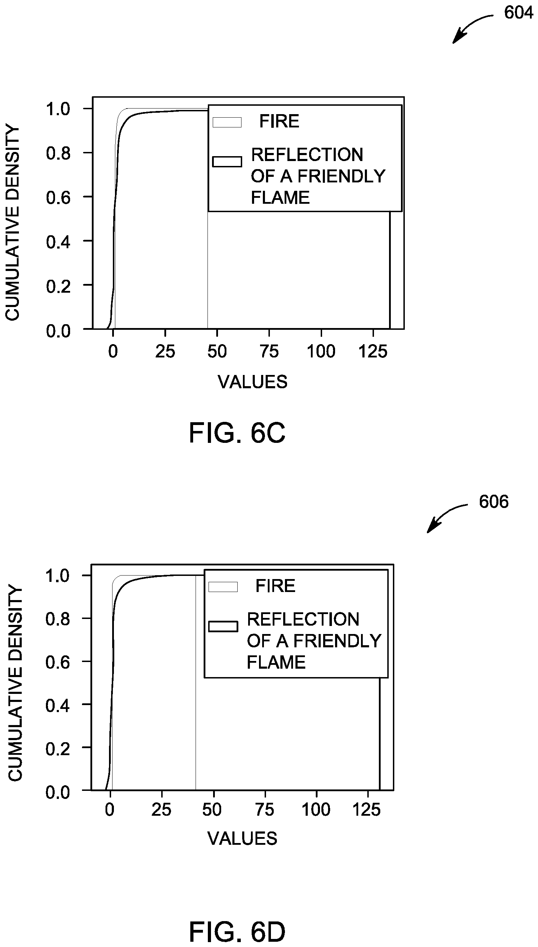

As illustrated in FIG. 6C, a KDE plot 604 may illustrate sum of the power spectrum density over a narrow band alternating current (PSDRatioHiSum NB_AC) signal of the one or more ADC signals 502. Further, the KDE plot 604 may illustrate visual representation of a difference between the one or more ADC signals 502 indicative of the fire and the one or more ADC signals 502 indicative of the reflection of the friendly flame for sum of the power spectrum density over a narrow band alternating current signal of the one or more ADC signals 502. Further, the X-axis of the KDE plot 604 corresponds to values of time interval and the Y-axis of the KDE plot 604 corresponds to the cumulative density of the one or more ADC signals 502.

As illustrated in FIG. 6D, a KDE plot 606 may illustrate another sum of the power spectrum density over the narrow band alternating current (PSDRatioHiSum2 NB_AC) signal of the one or more ADC signals 502. Further, the KDE plot 606 may illustrate visual representation of a difference between the one or more ADC signals 502 indicative of the fire and the one or more ADC signals 502 indicative of the reflection of the friendly flame for sum of the power spectrum density over a narrow band alternating current signal of the one or more ADC signals 502. Further, the X-axis of the KDE plot 606 corresponds to values of time interval and the Y-axis of the KDE plot corresponds to the cumulative density of the one or more ADC signals 502.

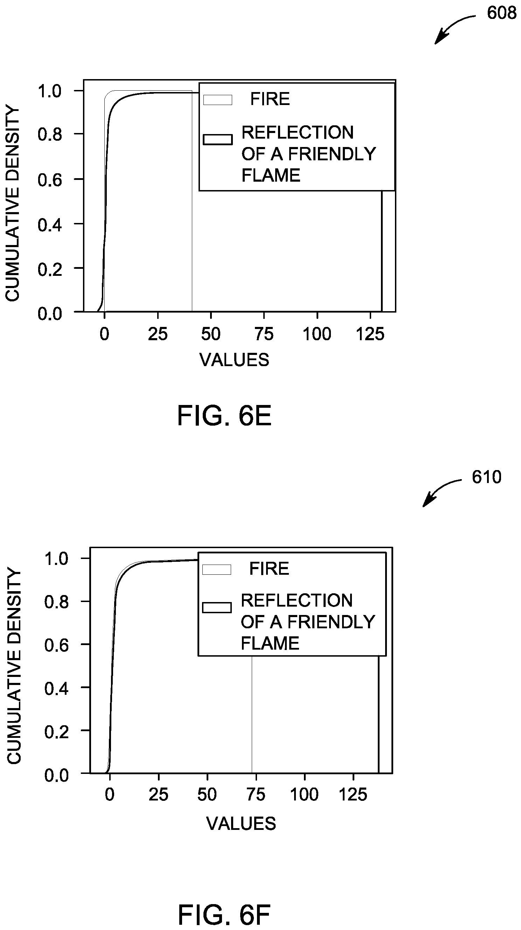

As illustrated in FIG. 6E, a KDE plot 608 may illustrate another sum of the power spectrum density over the narrow band alternating current (PSDRatioLowSum NB_AC) signal at low frequency of the one or more ADC signals 502. Further, the KDE plot 608 may illustrate visual representation of a difference between the one or more ADC signals 502 indicative of the fire and the one or more ADC signals 502 indicative of the reflection of the friendly flame for sum of the power spectrum density over a narrow band alternating current signal of the one or more ADC signals 502. Further, the X-axis of the KDE plot 608 corresponds to values of time interval and the Y-axis of the KDE plot 608 corresponds to the cumulative density of the one or more ADC signals 502.

As illustrated in FIG. 6F, a KDE plot 610 illustrates visual representation of a difference between the one or more ADC signals 502 indicative of the fire and the one or more ADC signals 502 indicative of the reflection of the friendly flame for sum of the power spectrum density over a ration of a narrow band and low band signals of the one or more ADC signals 502. Further, the X-axis of the KDE plot 610 corresponds to values of time interval and the Y-axis of the KDE plot 610 corresponds to the cumulative density of the one or more ADC signals 502.

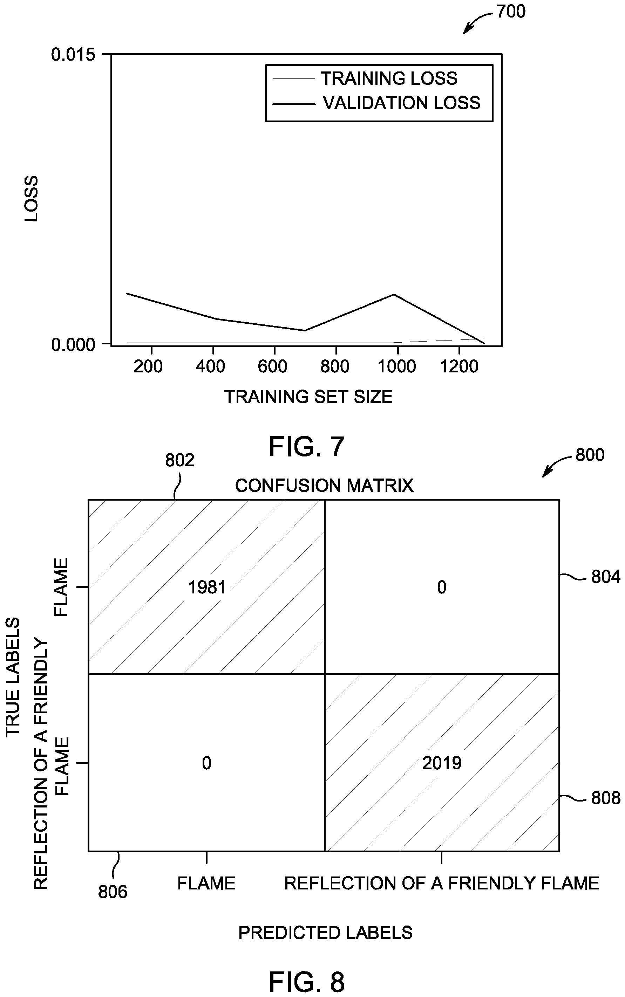

FIG. 7 illustrates a graphical representation of learning curve 700 for a machine learning (ML) model, in accordance with an example embodiments of the present disclosure. FIG. 7 is described in conjunction with FIG. 3.

In some embodiments, the ML model 110 may be configured to register a loss of the one or more ADC signals 502 during the training through the plurality of characteristics and validation of the trained ML model 110. In some embodiments, the X-axis illustrates a training set size of the data sets provided for training the ML model 110. Further, the Y-axis illustrates loss of the training set.

FIG. 8 illustrates a graphical representation of a confusion matrix 800 of the ML model test results, in accordance with one or more embodiments of the present disclosure. FIG. 8 is described in conjunction with FIG. 3.

In some embodiments, the ML model 110 may employ the confusion matrix 800 to test the data sets provided to the ML model 110 while training. In some embodiments, the confusion matrix 800 may be configured to provide prediction of the test results. In some embodiments, a first quadrant 802 of the confusion matrix 800 provides prediction as true positives, a second quadrant 804 of the confusion matrix 800 provide prediction as true negatives, a third quadrant 806 of the confusion matrix 800 provide prediction as false positives, and a fourth quadrant 808 of the confusion matrix 800 provide prediction as false negatives.

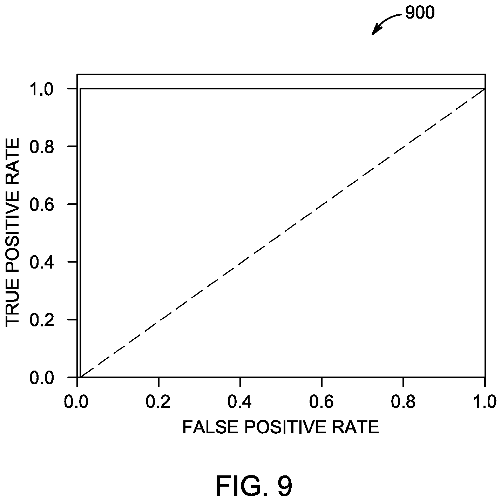

FIG. 9 illustrates a receiver operating characteristics (ROC) graph 900 of the trained ML model 110, in accordance with one or more embodiments of the present disclosure. FIG. 9 is described in conjunction with FIG. 3.

In some embodiments, the ROC characteristics of the ML model 110 may be configured to plot a true positive rate against a false positive rate at various classification thresholds, the ROC characteristics may be configured to provide a comprehensive visualization of accuracy of the ML model 110. The X-axis of the ROC illustrates a false positive rate and the Y-axis of the ROC illustrates a true positive rate.

At operation 334, the ML model 110 may be configured to determine status of the flame by employing a voting classifier. Further, the voting classifier may be configured to determine the status of the flame, based at least on results of the tests performed by the ML model 110. Further, at operation 346, the at least one processor 106 may be configured to generate the signal in response to the determination that one or more ADC signals 502 that are indicative of the fire, the friendly flame, or reflection of friendly flame. Further, the at least one processor 106 may be configured to transmit the signal to the communication device 114 for alerting the user.

In some embodiments, the trained ML model 110 may be configured to provide one or more test results based on tests performed by the ML model 110. Further, the test results involve response of the ML model 110 during the combustion of fuel source.

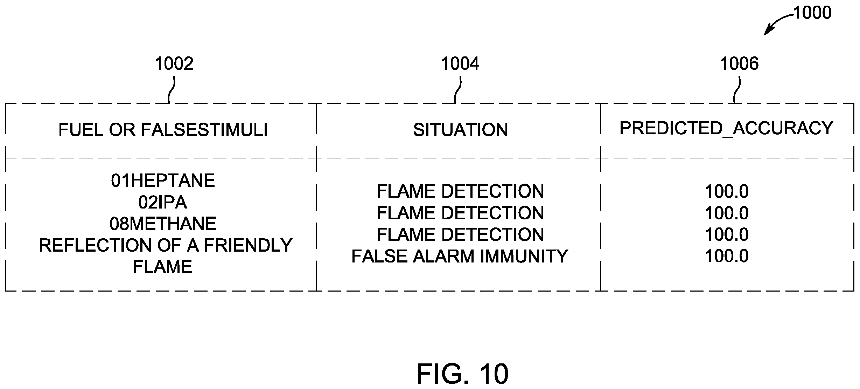

FIG. 10 illustrates a table 1000 having test results of the trained ML model 110, in accordance with an example embodiment of the present disclosure.

In some embodiments, the test results of the ML model 110 are depicted in table 1000. The table 1000 provides fuel or false fuel stimuli 1002, situation 1004, and predicted accuracy 1006. The fuel or false fuel stimuli 1002 provides a first reading of 01HEPTANE that associated with flame detection situation. The detection of the flame carrying heptane fuel is predicted with 100% accuracy. The fuel or false fuel stimuli 1002 provides a second reading of 02IPA that associated with flame detection situation. The detection of the flame carrying IPA (isopropyl alcohol) fuel is predicted with 100% accuracy. The fuel or false fuel stimuli 1002 provides a third reading of 08METHANE that associated with flame detection situation. The detection of the flame carrying METHANE fuel is predicted with 100% accuracy. The fuel or false fuel stimuli 1002 provides a fourth reading of friendly fire that associated with flame detection situation. The detection of the friendly fire is predicted with 100% accuracy. The results for determining status of flame for different fuel sources. In some embodiments, the. In some embodiments, the ML model 110 may possess a 100 percent accuracy rate while determining the status of the Flame.

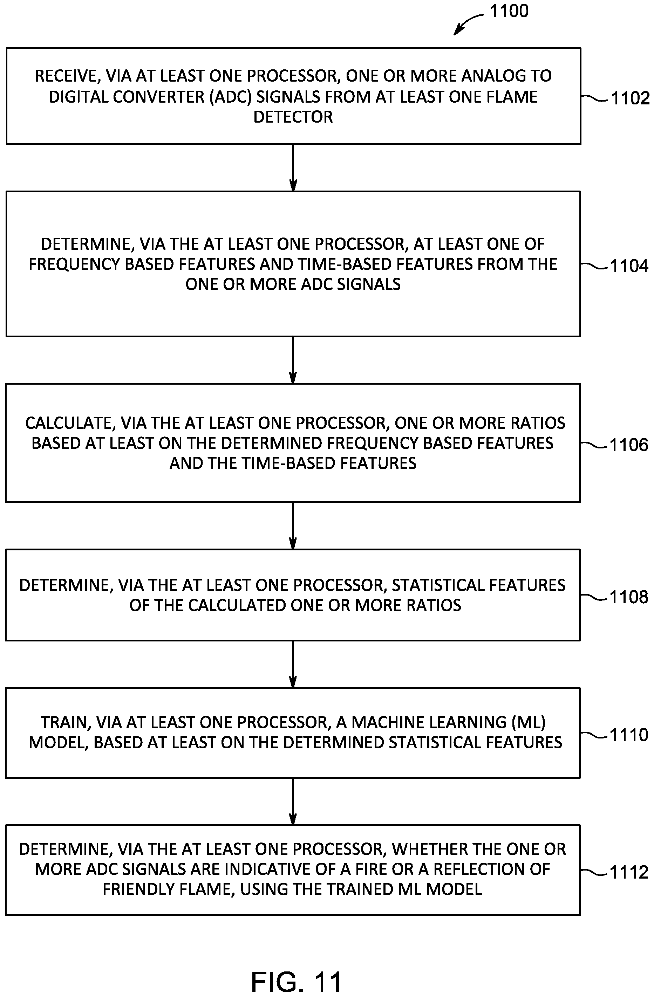

FIG. 11 illustrates a flowchart of a method 1100, in accordance with an example embodiment of the present disclosure. FIG. 11 is described in conjunction with FIGS. 1-10.

At operation 1102, the one or more ADC signals 502 may be received from the at least one flame detector 104 by the at least one processor 106. Further, the one or more radiations in the FOV may be detected by the at least one flame detector 104. In some embodiments, the at least one flame detector 104 may correspond to the at least one IR sensor 204, the photodiodes 208 or the combination of the at least one IR sensor 204 and the photodiodes 208. Further the one or more radiations may correspond to the one or more analogue signals. Further, the at least one flame detector 104 may be configured to transmit the one or more analogue signals to the ADC. In some embodiments, the ADC may be configured to generate the one or more ADC signals 502. For example, at least one flame detector104 is installed within an industrial environment. The at least one flame detector 104 detects one or more radiations from combustion of a flame source 102. Further, the at least one flame detector 104 transmits one or more electrical signals corresponding to the one or more radiations to at least one processor 106.

At operation 1104, the frequency based features, and the time-based features from the ADC signals 502 may be determined by the at least one processor 106. Further, the frequency based features, and the time-based features may be referred as the plurality of characteristics, as explained from operation 312-328. For example, the at least one processor 106 is configured to determine a plurality of characteristics from the one or more ADC signals 502. Further, the plurality of characteristics includes time based features and frequency based features. The frequency based features comprises frequency power spectrum, dominant frequencies, Etc.

At operation 1106, the one or more ratios may be calculated based at least on the determined frequency based features and the time-based features by the at least one processor 106. Further, the one or more ratios may correspond to the frequencies of the one or more ADC signals 502 at different time intervals, as explained from operation 324 to operation 330. For example, the at least one processor 106 is configured to calculate ratios based on the determined frequency based features and the time-based features.

At operation 1108, the at least one processor 106 is configured to determine the statistical features of the calculated one or more ratios. In some embodiments, the statistical features may comprise skewness or kurtosis and skewness and kurtosis ratio, as explained in operation 330. For example, the at least one processor 106 is configured to determine statistical features by using the calculated one or more ratios. Further, the at least one processor may employ one or more data pre-processing techniques to determine the statistical features.

At operation 1110, the at least one processor 106 may be configured to train the ML model 110 based at least on the plurality of characteristics. In some embodiments, the at least one processor 106 may be configured to train the ML model 110 to feed the plurality of characteristics at equal time intervals. Further, the plurality of characteristics may include fluctuations and modulations of the one or more ADC signals 502. For example, the at least one processor 106 is configured to feed the determined statistical features into a machine learning (ML) model 110. Further, the at least one processor 106 is configured to train the ML model 110 based on one or more datasets fed to the ML model 110 at different time interval. Further, the at least one processor 106 is configured to validate and test the datasets.

At operation 1112, the at least one processor 106 may be configured to determine whether the one or more ADC signals 502 are indicative of a fire, a friendly flame, or a reflection of a friendly flame, using the trained ML model 110. In some embodiments, the at least one processor 106 may be configured to train, validate and test the ML model 110 based at least one the plurality of characteristics to determine the status of the flame. For example, the at least one processor 106 trains, validates and tests the ML model 110, based at least on the plurality of features. Further, the at least one processor 106 determine the status of a flame as a fire of a friendly flame, based on the testing results of the ML model 110. For example, the at least one processor 106 is configured to determine whether the one or more ADC signals 502 are indicative of a fire, a friendly flame, or a reflection of a friendly flame based at least on tests results of the ML model 110.

Embodiments may be configured to determine status of a flame in a field of view (FOV). Embodiments may be configured to detect one or more radiations emitted from the flame source through the at least one flame detector 104. Embodiments may be configured to indicate the fire, friendly flame, or reflection of a friendly flame in the FOV. Embodiments configured to determine the plurality of characteristics from the one or more radiations through the at least one processor 106. Embodiments may be configured to determine whether the detected one or more radiations may indicate fire, friendly flame, or reflection of a friendly flame by means of the ML model 110.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system comprising:
at least one flame detector configured to detect one or more radiations within a field of view (FOV) and convert into one or more analog to digital converted (ADC) signals; and
at least one processor operationally coupled to the at least one flame detector, the at least one processor is configured to:
receive the one or more ADC signals from the at least one flame detector;
determine a plurality of characteristics from the one or more ADC signals, wherein the plurality of characteristics comprises at least one of statistical features, frequency based features, or time-based features; and
determine whether the one or more ADC signals are indicative of a fire, a friendly flame, or a reflection of a friendly flame based at least on the plurality of characteristics using a trained machine learning (ML) model.

2. The system of claim 1, wherein the at least one processor is configured to train the ML model based at least on the plurality of characteristics extracted from the one or more ADC signals over a period of time.

3. The system of claim 2, wherein the at least one processor is configured to deploy the trained ML model for determining the fire, the friendly flame, or the reflection of the friendly flame.

4. The system of claim 1, wherein the at least one flame detector comprises at least one of infrared (IR) sensors, photodiodes, or a combination of the IR sensors and the photodiodes.

5. The system of claim 1, wherein the statistical features comprises at least one of a skewness, kurtosis, or skewness and kurtosis ratio.

6. The system of claim 1, wherein the at least one processor is configured to detect fluctuations or modulation of the plurality of characteristics determined from the one or more ADC signals to determine whether the one or more ADC signals are indicative of the fire, the friendly flame, or the reflection of the friendly flame.

7. The system of claim 1, wherein the at least one processor is configured to extract the plurality of characteristics within a low frequency range and a high frequency range of the fire, the friendly flame, and the reflection of the friendly flame.

8. The system of claim 7, wherein the low frequency range defines a range between 2-9 Hz and 11-15Hz and the high frequency range defines frequencies higher than 15Hz.

9. The system of claim 1, wherein the trained ML model comprises aggregated simulation of a plurality of models that are trained by the at least one processor over a period of time.

10. The system of claim 1, wherein the at least one processor is configured to:
generate a signal in response to a determination that the one or more ADC signals are indicative of a fire; and
transmit the signal to a communication device for alerting a user.

11. A method comprising:
receiving, via at least one processor, one or more analog to digital converter (ADC) signals from at least one flame detector;
determining, via the at least one processor, a plurality of characteristics from the one or more ADC signals, wherein the plurality of characteristics comprises at least one of statistical features, frequency based features, or time-based features; and
determining, via the at least one processor, whether the one or more ADC signals are indicative of a fire, a friendly flame, or a reflection of a friendly flame, based at least on the plurality of characteristics using a trained machine learning (ML) model.

12. The method of claim 11, wherein the at least one flame detector is configured to detect one or more radiations within a field of view (FOV) and convert into the one or more analog to digital converter (ADC) signals.

13. The method of claim 11, wherein the trained ML model is determined based at least on the plurality of characteristics extracted from the one or more ADC signals over a period of time.

14. The method of claim 11 further comprising deploying, via the at least one processor, the trained ML model for determining the fire, the friendly flame, or the reflection of the friendly flame.

15. The method of claim 11, wherein the at least one flame detector comprises at least one of infrared (IR) sensors, photodiodes, or a combination of the IR sensors and the photodiodes.
